# EUROPEAN PATENT APPLICATION

(11) **EP 2 017 477 A1**
(43) Date of publication of application: **21.01.2009**
(21) Application number: 07112729.4
(22) Date of filing: 19.07.2007
(51) Int. Cl.: F04B 43/12, G01N 1/14, G01N 35/10

(54) **Automated pumping device**

(71) Applicant: The Automation Partnership (Cambridge) Limited, Royston, Hertfordshire SG8 5WY (GB)
(72) Inventor: Bargh, Adrian Neil, Royston, Hertfordshire SG8 5BW (GB)
(74) Representative: Brunner, Michael John

(57) **Abstract**

An automated pumping device is disclosed which has a peristaltic pump 21,221.222,223 having a number of separate channels 22 for pumping liquid. Each channel including a corresponding flexible passageway 212 for passing liquid through the pump to a corresponding output 210. One or more of the channels may be selectively operated separately from other channels in use. A closure mechanism 232 is provided for closing and opening each passageway 212 to prevent or allow the passage of liquid therethrough.

## Description

The present invention relates to an automated pumping device and, more particularly, to an automated dispensing device for delivering and/or removing liquids to sample vessels, especially SBS format microtitre plates or the like.

It is known to use a peristaltic pump to deliver liquid to multiple wells in a microtitre plate such as an SBS format plate or a rack of tubes or other culture plates with permeable membranes, such as Transwell^{®} tissue culture plates, the pump delivering fluid through a plurality of tips to a group of wells within the microtitre plate simultaneously. US-A-4 995 432 discloses the use of a peristaltic pump for dosing vessels with liquid.

Increasingly, however, there is a demand for smaller or fewer numbers of samples to be worked upon and whilst such a demand can be satisfied by individually delivering liquid to independent wells or other sample vessels one at a time, this generally involves wasting sample space if a microtitre plate is used and this, in turn, delays the investigation or culturing process.

The present invention is aimed at providing an automated dispensing device with greater operational flexibility and efficiency.

According to the present invention there is provided an automated pumping device, the device including
a peristaltic pump having a number of separate channels for pumping liquid therethrough;
each channel including a corresponding flexible passageway for passing liquid through the pump to a corresponding output;
means for selectively operating one or more channels separately from other channels in use; and
means for closing and opening each passageway to prevent or allow the passage of liquid therethrough.

Each channel may be separately operable or groups of channels operable together.

Preferably, the peristaltic pump includes a plurality of cartridges each containing a corresponding one of the flexible passageways and each cartridge is movable away from a rotor of the peristaltic pump to disengage the rotor from the respective flexible passageway. Preferably, each cartridge mounts a dispensing tip connected to a corresponding one of the passageways and through which liquid can be dispensed in use. Each flexible passageway may comprise a flexible tube disposed along a pathway defined in the cartridge. Advantageously, the flexible tube in each cartridge includes a tensioner to adjust the tension in the tube and hence adjust the cross-sectional area of the tube.

Preferably, the flexible tubes are opened and closed by a pinch mechanism arranged to squeeze the tubes to close them and the means for closing and opening the passageways is arranged to enable each passageway to be separately opened and closed and is arranged to enable groups of passageways to be opened and closed together.

The device may also include a plurality of aspirating channels separate from the channels in the peristaltic pump, for removing fluid from a vessel in use. One or more of the aspirating channels may be arranged to be operated separately from others.

The device preferably has a support for a multi-well microtitre plate, the support being movable in a plane between a plurality of positions in use to enable liquid to be dispensed into or aspirated from the wells in the microtitre plate.

The peristaltic pump, the flexible passageways and the outputs are preferably disposed within a unit for movement together, the unit being movable orthogonally to the plane of movement of the support. The movement of the unit relative to the support may control the closing and opening of each passageway and the selective operation of the pump channels.

Preferably, the aspirating channels are mounted for movement on the unit in use into or out of engagement with the wells in the microtitre plate.

The device may further include a wash bath movable with the support in the plane.

The invention also includes a method of providing fluid to a microtitre plate or the like using a device as defined above, wherein the liquid is selectively provided into wells in the microtitre plate or the like under the action of the peristaltic pump. Liquid may be also or alternatively be removed from a microtitre plate using the device.

The method may further include steps in which fluid is provided into wells in the microtitre plate, the support is then moved to dispose the wash bath beneath the outputs, the outputs are then lowered into the wash bath, washing liquid is then passed through the flexible passages and into the wash bath through the outputs to fill the wash bath to a predetermined extent, the support and the unit are then moved to dispose the aspirating channels in the wash bath and washing liquid is then withdrawn from the washing bath through the aspirating channels.

Liquid may be selectively removed from wells in the microtitre plate or the like through the aspirating channels or through the dispensing channels. The aspirating channels may also be used for removing fluid from the wash bath.

One example of an automated dispensing device according to the present invention will now be described with reference to the accompanying drawings in which:
Figure 1 is an isometric view of the device;
Figures 2A & 2B are partial side views of part of the device;
Figure 3A is an exploded view of a dispensing assembly of the device;
Figure 3B is a partial sectional view through the dispensing assembly;
Figure 4 is a side elevation of a pump cartridge used in the device and shown in two different positions;
Figure 5 is an isometric view of the pump cartridge shown in Figure 4;
Figure 6 is a further side elevation of a pump cartridge; and

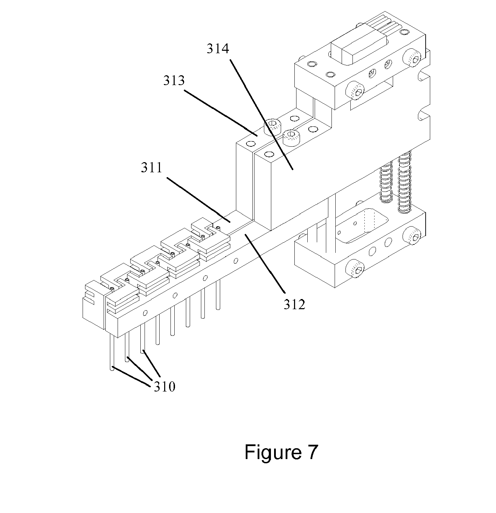

Figure 7 is an isometric view of an aspirating assembly forming part of the device.

The automated dispensing device 1 which is shown in the figures is intended for supplying fluid to and aspirating fluid from microtitre plates of the SBS format. The device 1 has a carriage 10 having a support plate 11 onto which a SBS format microtitre plate having multiple wells, for example 24, 96 or 384 wells disposed in a 2-dimensional grid, can be disposed. When the dispensing device forms part of a larger machine the SBS format microtitre plate can be disposed on the plate 11 by a robotic handling system (not shown). The carriage assembly also carries a washing bath 12 for washing dispensing and aspirating tips as will be described later. The carriage 12 is movable in a plane (the X-Y plane) by means of a pair of stepper motors 13,14 which drive the carriage along respective guide rails 15,16 in use to allow the microtitre plate to be moved horizontally in the X-Y plane as desired.

Disposed generally above the X-Y plane and the carriage 10 is a dispensing assembly 20 and an aspirating assembly 30, which are movable vertically (in the Z-axis) in use under the control of a further motor 17.

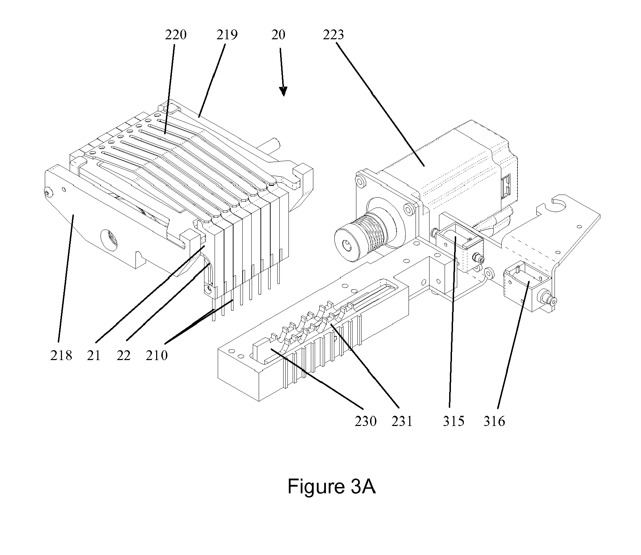

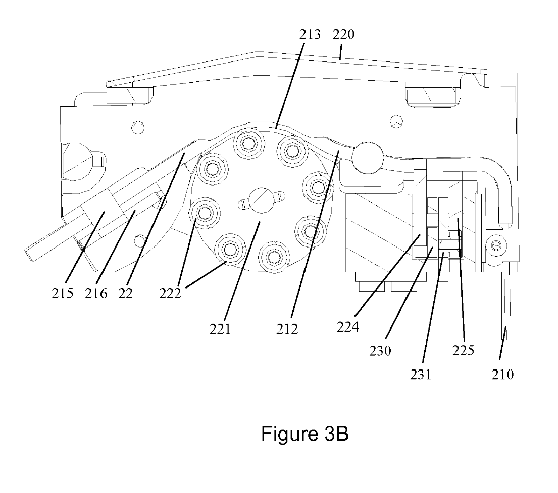

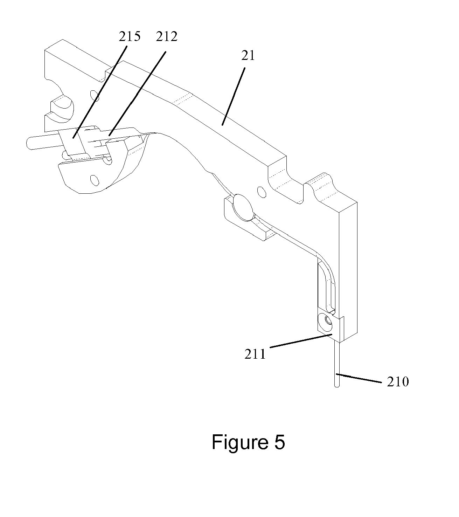

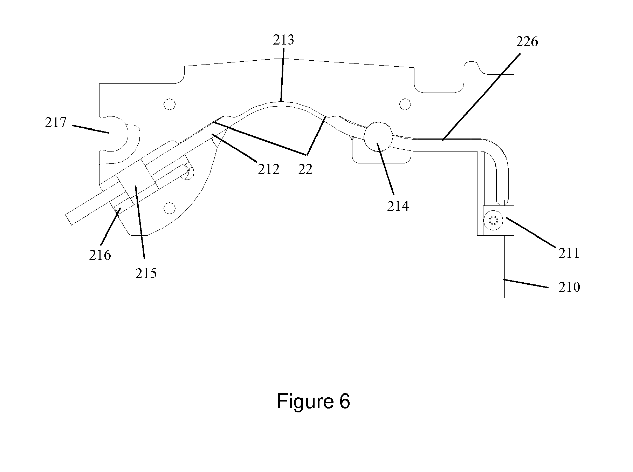

The dispensing assembly 20 includes a bank of dispensing pump cartridges 21 (eight in all) each of which carries a dispensing tip in the form of a thin metal tube 210 and which is mounted in one end of the dispensing cartridge 21 by means of a clamping plate 211 (see Figures 3-6). Each dispensing cartridge 21, which is preferably formed of a synthetic plastics material, provides a pathway or channel 22 for a flexible plastics tube 212 which supplies liquid to the tip 210. The pathway 22 has a central arcuate portion 213 which is designed to engage with individual rollers of a peristaltic pump rotor (as will be described later in connection with Figure 3). The flexible tube 212 is fixed in position by first and second mountings 214,215, the mounting 215 being adjustable axially, by means of an adjustment screw 216, to tension the tube 212 to allow adjustability for uniformity of fluid delivery under the action of the peristaltic pump through the tube 212. Tensioning the tube 212 reduces the internal diameter and vice versa to enable, across the bank of cartridges 21, uniformity of volumetric flow to be achieved by suitable adjustment.

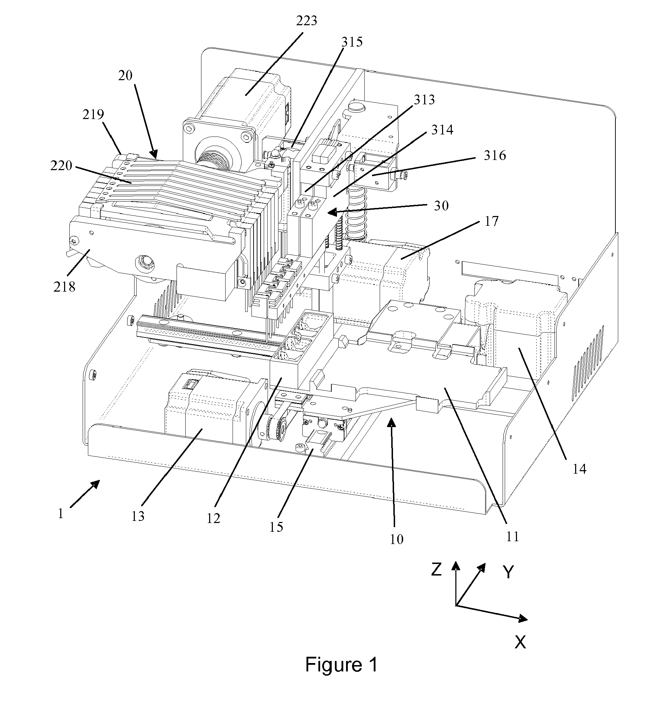

Each of the dispense pump cartridges 21 is pivotally mounted at a bearing point 217 in use on a rod or bearing (not shown) which extends between side members 218,219 of the dispensing assembly 20 (see Figure 1). A set of leaf springs 220 is disposed on top of the dispensing assembly 20 to bias the dispense pump cartridges 21 into the position shown in Figure 1. Extending across the underside of the dispense pump cartridges 21 is a pump rotor 221 which carries a set of rollers 222 which are designed to roll around the arcuate part of the pathway 213 so as to squeeze the flexible tubes 212 and, as conventional in a peristaltic pump, push liquid through the tubes 212 when the rotor rotates in the clockwise direction shown in Figure 3, towards the dispensing tip 210. The rollers 222 are regularly spaced around the periphery of the rotor 221 which is driven, in use by a motor 223 (see Figure 1).

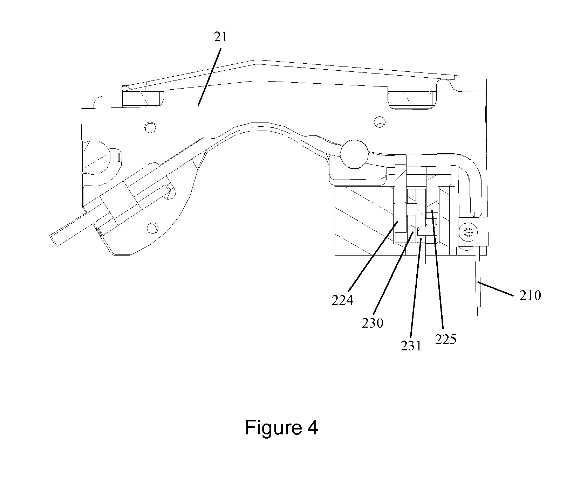

Owing to the pivotal mounting of each dispensing cartridge 21 the cartridges can be individually engaged with or disengaged from the rollers 222 and Figure 4 shows two positions of a dispense pump cartridge 21, in the raised position the rollers 222 being removed from engagement with the tube 212 in the arcuate part 213 of the pathway through the cartridge.

In order to raise the cartridges 21 against the action of the leaf springs 220, a pair of lifting bars 224,225 engage the underside of a flat portion 226 of each of the tube pathways through each dispense cartridge. Each of the lifting bars 224,225 has a pair of cam surfaces 227,228 along which are arranged to roll, wheels 229, mounted on actuator bars 230,231 respectively, the actuator bars 230,231 being movable horizontally as described below. The carriage 10 is positioned so that a tongue 235 located on the upper side of the wash bath12 is appropriately aligned with the space between two pegs 234 located on the underside of each actuator bar 230,231. The dispensing assembly 20 is then lowered to engage the tongue 235 between the pegs 234 and the carriage 12 is then moved in the Y direction causing one or both of the actuator bars 230,231 to also move. The wash bath tongue 235 can be moved in the X direction to position it beneath either or both of the sets of pegs 234 to determine which one or both of the actuator bars 230,231 are moved. As the actuator bar or bars are moved sideways, the lifting bars are caused to move upwards by the wheels 229 rolling on the cam surfaces 227,228 and the lower side of cups 232 in the lifting bars 225 first engage the lower side of the respective flexible tubes 212 squeezing the corresponding tubes against the opposing surface of the dispensing cartridge 21 and therefore closing the tubes against fluid flow.

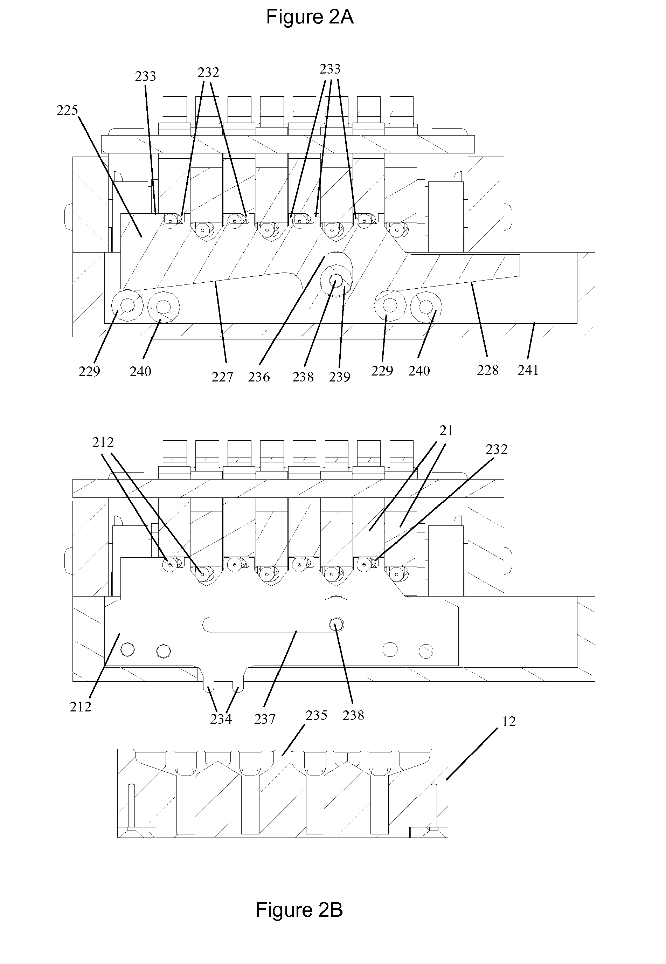

Continued relative upwards movement of the lifting bar or bars, which are individually actuatable to engage with alternate ones of the dispense pump cartridges 21, causes lifting abutments 223 on each side of the cups 232 to engage directly against the underside of the dispense cartridges 21 to cause them to pivot around the bearing point 217 against the action of the leaf springs 220 thereby disengaging the flexible tube 212 from the pump rollers 222. As will be appreciated, the relative movement between the parts is caused by the movement of the carriage 10 in the X-Y plane and the movement of the dispensing assembly 20 in the Z-axis and the corresponding engagement of the actuator bars 230,231 with the tongue 235 on the top of the wash bath 12. The actuating bars 230,231 do (and can only) move sideways relative to the cartridges 21. The lifting bars 224,225 do (and can only) move vertically relative to the cartridges 21. Figure 2A shows a vertical short fat slot 236 in the lifting bar and a horizontal long thin slot 237 in the corresponding actuator bar. A fixed dowel pin 238 runs through both the slots in the actuator bars and the lifter bars. A bearing 239 is mounted to the dowel pin 238 to fit the vertical short fat slot 236. The slot, dowel pin and bearing constrain the vertical and horizontal movements of the lifter bars and actuator bars respectively. Note that the horizontal long thin slot 237 has enough clearance so that there is no contact with the dowel pin 238 in normal operation to allow the wheels 240 to run on a horizontal surface 241 provided on the dispensing assembly 20.

Although in this example the dispense cartridges 21 are "ganged" together alternately into groups of four, so as to be operated together, individual actuators may be provided for each of the dispense pump cartridges if desired. In the present example the cartridges are shown to pivot, but, if desired, they may be, relatively, lifted at both ends if desired.

Disposed adjacent to and substantially opposite the dispensing tips 210 there are arranged two sets of aspirating tips 310 on the aspirating assembly 30. The aspirating tips 310 are arranged in two groups, alternating tips 310 being movable together on a lifting bar 311,312 each of the bars 311,312 is supported on a vertically movable carriage 313,314 respectively and each of the carriages 313,314 is engageable with a respective solenoid 315,316 carried on the combined dispensing and aspirating assembly 20,30 for movement, when engaged with the respective solenoid in the Z-axis direction in order to allow respective ones of the tips 310 to be inserted into respective wells of the microtitre plate. If desired, each of the tips 310 may be operated independently of the others, but as with the dispensing tips 210, in this example they are grouped in the same way that the dispensing tips are grouped.

It will be apparent that the movement of the carriage 10 in the X direction governs the relative alignment of the dispensing tips 210 and the aspirating tips 310 with the wells that are formed in the microtitre plate and the movement in the Z-axis direction governs the extent of insertion or movement towards and away from the wells in the microtitre plate.

The drawings do not show the connection of the aspirating tips to appropriate tubing as this would render the drawings rather unclear, but aspiration may be achieved either by means of vacuum applied to the tubes as required or else by means of a pump such as a further peristaltic pump.

The movement of the carriage 10 in the X and Y directions enable the dispensing tips 210 and the aspirating tips 310 to be aligned as required very precisely, so that microtitre plates and the like with differing horizontal well spacing can be accommodated.

It is also envisaged that the numbers of aspirating tips on the lifting bars 311, 312 may vary from device to device as required again to suit different microtitre plates or different processes. The numbers of tips 310 on the two lifting bars 311, 312 may also be different in the same device.

## Claims

1. An automated pumping device, the device including
a peristaltic pump having a number of separate channels for pumping liquid therethrough;
each channel including a corresponding flexible passageway for passing liquid through the pump to a corresponding output;
means for selectively operating one or more channels separately from other channels in use; and
means for closing and opening each passageway to prevent or allow the passage of liquid therethrough.

2. A device according to claim 1, wherein each channel is separately operable.

3. A device according to claim 1, wherein groups of channels are operable together.

4. A device according to any of claims 1 to 3, wherein the peristaltic pump includes a plurality of cartridges each containing a corresponding one of the flexible passageways.

5. A device according to claim 4, wherein each cartridge is movable away from a rotor of the peristaltic pump to disengage the rotor from the respective flexible passageway.

6. A device according to claim 4 or claim 5, wherein each cartridge mounts a dispensing tip connected to a corresponding one of the passageways and through which liquid can be dispensed in use.

7. A device according to any of claims 4 to 6, wherein each flexible passageway comprises a flexible tube disposed along a pathway defined in the cartridge.

8. A device according to claim 7, wherein the flexible tube in each cartridge includes a tensioner to adjust the tension in the tube and hence adjust the cross-sectional area of the tube.

9. A device according to claim 7 or claim 8, wherein the flexible tubes are opened and closed by a pinch mechanism arranged to squeeze the tubes to close them.

10. A device according to any of claims 1 to 9, wherein the means for closing and opening the passageways is arranged to enable each passageway to be separately opened and closed.

11. A device according to any of claims 1 to 9, wherein the means for closing and opening the passageways is arranged to enable groups of passageways to be opened and closed together.

12. A device according to claims 5, 7, and 9, wherein the pinch mechanism is also arranged to move a respective cartridge away from the rotor after having closed the respective flexible tube.

13. A device according to any of claims 1 to 12, further including a plurality of aspirating channels separate from the channels in the peristaltic pump, for removing fluid from a vessel in use.

14. A devise according to claim 13, wherein one or more of the aspirating channels is arranged to be operated separately from others.

15. A device according to any of claims 1 to 14, further including a support for a multi-well microtitre plate, the support being movable in a plane between a plurality of positions in use to enable liquid to be dispensed into or aspirated from the wells in the microtitre plate.

16. A device according to any of claims 1 to 15, wherein the peristaltic pump, the flexible passageways and the outputs are disposed within a unit for movement together.

17. A device according to claims 15 and 16, wherein the unit is movable orthogonally to the plane of movement of the support.

18. A device according to claim 17, wherein the movement of the unit relative to the support controls the closing and opening of each passageway.

19. A device according to claim 17 or claim 18, wherein the movement of the unit relative to the support controls the selective operation of the pump channels.

20. A device according to claims 13 or 14 and claims 16 or 17, wherein the aspirating channels are mounted for movement on the unit in use into or out of engagement with the wells in the microtitre plate.

21. A device according to claim 15, further including a wash bath movable with the support in the plane.

22. A method of providing fluid to a microtitre plate or the like using a device according to any of claims 1 to 21, wherein the fluid is selectively provided into wells in the microtitre plate or the like under the action of the peristaltic pump.

23. A method according to claim 22, further including removing liquid from a microtitre plate using a device according to claims 13 or 20 and claim 21.

24. A method according to claim 22 using a device according to claims 13 or 20 and claim 21, wherein fluid is provided into wells in the microtitre plate, the support is then moved to dispose the wash bath beneath the outputs, the outputs are then lowered into the wash bath, washing liquid is then passed through the flexible passages and into the wash bath through the outputs to fill the wash bath to a predetermined extent, the support and the unit are then moved to dispose the aspirating channels in the wash bath and washing liquid is then withdrawn from the washing bath through the aspirating channels.

25. A method according to claim 22, when using a device according to claims 13 or 20, wherein liquid is selectively removed from wells in the microtitre plate or the like through the aspirating channels.

26. A method according to claim 22, wherein liquid is selectively removed from wells in the microtitre plate or the like through the dispensing channels.

27. A method of removing fluid from a microtitre plate or the like using a device according to claim 13 or any of claims 14 to 21 when dependent thereon, wherein liquid is selectively removed from the wash bath through the aspirating channels.
